# EUROPEAN PATENT APPLICATION

(11) **EP 4 474 346 A1**
(43) Date of publication of application: **11.12.2024**
(21) Application number: 23178232.7
(22) Date of filing: 08.06.2023
(51) Int. Cl.: C01B 32/00, C01B 32/05, H01M 4/36, H01M 4/587

(54) **A PROCESS FOR PRODUCING ISOTROPIC CARBONACEOUS PRECURSOR AGGLOMERATES**

(71) Applicant: Rain Carbon Germany GmbH, 44579 Castrop-Rauxel (DE)
(72) Inventor: Edwards, Les, Kingwood, 77345 (US); Hunt, Maia, Madisonville, 70447 (US); Kuhnt, Christopher, 58452 Witten (DE); Spahr, Michael, 6500 Bellinzona (CH)
(74) Representative: BiiP bv

(57) **Abstract**

The present invention is directed to a process for producing isotropic carbonaceous precursor agglomerates including the steps of
i. Providing coke particles with an average particle size < 50 µm and said particles having a volatile matter content (VM) between 4 % and 20 %.
ii. Mixing and agglomerating the coke particles with the addition of water and a water-soluble temporary binder
iii. At least partially drying the mixture,
iv. Carbonizing the mixture.

In addition, the present invention provides is directed to a process for the manufacturing of isotropic graphitic electrode materials for battery electrodes, in particular for lithium-ion batteries, said process including the process for producing isotropic carbonaceous precursor agglomerates in accordance with the present invention, and further graphitizing said agglomerates to electrode material.

## Description

### TECHNICAL FIELD

The present invention generally relates to a process for producing carbonaceous precursor agglomerates, in particular isotropic carbonaceous precursor agglomerates. These agglomerates may be particularly useful as a precursor for isotropic graphite.

Further, the present invention also relates to a process for the manufacturing of isotropic graphitic electrode materials for battery electrodes, in particular for Li-lon batteries and for EV (electric vehicles) batteries.

### BACKGROUND

Negative electrodes of lithium-ion batteries predominantly contain isotropic natural graphite and/or synthetic graphite. Isotropic synthetic graphite materials are considered as premium negative electrode materials especially in Li-ion batteries as isotropic synthetic graphite enables improved charge and discharge performance as well as cycling stability.

Further, to increase the energy density of a battery cell, silicon, silicon oxide, or silicon alloy particles are often added to the negative battery electrode in the form of a secondary particle composite with graphite or carbon.

Traditionally, in order to obtain the advantageous structures of porous electrode materials, fine graphite primary particles are aggregated to isometrically shaped agglomerates. These isotropic synthetic graphite agglomerates are produced from coke by agglomeration of fine coke and molten coal tar pitch and/or petroleum pitch. The carbon component is homogeneously mixed with the finely milled, solid pitch binder and the mixture is further treated in a high temperature reactor where the molten pitch causes the coke particles to agglomerate.

A general drawback of said high temperature agglomeration process is that it requires complex high temperature reactors and can be only upscaled to a certain limit. Due to the high residence time in the heat treatment step, upscaling requires several reactors to be operated in parallel to reach industrial relevant volumes since agglomeration and the initial heat treatment step takes place in the same equipment and are not separated from each other. Obviously, such upscaling drives the agglomerate product cost to a large extent. In addition, high temperature gradients and temperature homogeneity becoming an issue with larger size thermal batch reactors in which the powders are fluidized with the help of a screw ore mother mixer type.

A second drawback of said conventional process is that the pitch binder needs to be finely milled which requires specific measures with regards to handling and containment of the pitch dust due to the carcinogenic nature of some of the polyaromatic hydrocarbons contained in it.

Another conventional method for producing isometrically shaped agglomerates of graphite particles is spray granulation (as proposed in US 2018/0183060 A1). However, this method is less favorable as well due to the high cost of the spray drying process. In addition, particles formed during the spray-drying process are often hollow and show relatively low density and mechanical strength during compression.

Considering the above, it is a general objective of the present invention to provide a process for producing isotropic carbonaceous precursor agglomerates that require less complex equipment and processing, and lower processing cost.

It is also an objective of the present invention to provide a process for producing isotropic carbonaceous precursor agglomerates being more easily scalable to industrial scale.

In addition, it is also an objective of the present invention to provide a process for producing isotropic carbonaceous precursor agglomerates that induces less risk involved with respect to the carcinogenic nature of the polyaromatic hydrocarbons contained in the pitch binder.

Furthermore, it is also an objective of the present invention to provide an advantageous process for the manufacturing of isotropic graphitic electrode materials for battery electrodes, in particular porous electrode materials, and even more in particular for Li-lon batteries, for EV (electric vehicles) batteries, and for stationary batteries for battery energy storage.

### SUMMARY

The present invention provides a process for producing isotropic carbonaceous precursor agglomerates including the steps of
i. Providing coke particles with an average particle size < 50 µm and said particles having a volatile matter (VM) content between 4 wt.%-20 wt.%,
ii. Mixing and agglomerating the coke particles with the addition of water and a water-soluble temporary binder
iii. at least partially drying the mixture
iv. Carbonizing the mixture.

In addition, the present invention provides for a process for the manufacturing of isotropic graphitic electrode materials for battery electrodes, in particular for lithium-ion batteries, said process including the process for producing isotropic carbonaceous precursor agglomerates in accordance with the present invention, and further graphitizing said agglomerates to electrode material.

### DETAILED DESCRIPTION

The present invention is directed to the production of carbonaceous precursor agglomerates having an average agglomerate particle size of below 2000 micron, preferably below 1000 micron, a high isotropy, high density, low BET specific surface area and low porosity. The agglomerates can be used as a precursor for the manufacturing of isotropic graphitic electrode materials used in lithium-ion batteries, especially for batteries used for electric vehicles (EV) or battery energy storage applications. The carbonaceous agglomerates are composed of primary coke particles that are randomly oriented in the secondary particle structure. The small particle size and random orientation of the primary coke particles in the larger secondary agglomerate structure enable the isotropy of the resulting graphitized material. The particle isotropy of the resulting material contributes, when used as negative electrode material in an electrochemical lithium-ion cell, to a higher power density, charging speed, and cycling stability of the cell.

In the context of the present invention, isotropic agglomerates are understood as agglomerates in which primary particles are randomly oriented causing a high degree of isotropy within the agglomerates resulting in a high degree of uniformity in physical properties and characteristics in all directions of the agglomerate.

In accordance with the present invention, the process for producing isotropic carbonaceous precursor agglomerates includes the steps of:
i. Providing coke particles with an average particle size < 50 µm and said particles having a volatile matter (VM) content between 4 wt.%- 20 wt.%, preferably between 5 wt.% and 18 wt.%, preferably between 6 wt.%-15 wt.%
ii. Mixing and agglomerating the coke particles with the addition of water and a water-soluble temporary binder
iii. at least partially drying the mixture
iv. Carbonizing the mixture.

Coke particles with an average particle size < 50 µm may be obtained by applying a milling step. Preferably the coke particles have an average particle size between 1-20 µm.

In an embodiment, the coke particles may be green needle coke or other forms of green petroleum coke, preferably green petroleum coke having sulfur levels below 2 wt.%, or pitch coke.

In another embodiment of the present invention, the primary coke particles may be mixed with other carbonaceous materials such as natural or synthetic graphite, calcined petroleum coke fines, carbonaceous additives, carbonaceous waste, recycled materials, or a combination thereof. The recycled materials may comprise recycled graphite.

In an embodiment of the present invention, the concentration of primary coke particles in the total mix of primary particles may be at least 40 % by weight, preferably at least 50 % by weight, and even more preferably at least 60 % by weight. Persons skilled in the art will appreciate that the minimum required concentration of primary coke particles in the total mix of primary particles depends on its VM content.

Other additives may be nano- and micron-sized silicon metal, silicon oxide, tin or aluminum metal particles, or combinations thereof.

Preferably, the primary coke particles may have an ash content below 5000 ppm, more preferably below 2000 ppm.

Preferably, the primary coke particles may have a volatile matter (VM) level of between 4 wt.% and 20 wt.%, preferably between 5 wt.% and 18 wt.%, preferably between 6 wt.% and 15 wt.%. Comparing the carbon content of the coke particles with the carbon content of a pitch-based product, person skilled in the art appreciates that a VM level between 4 wt.% and 20 wt.% is comparable to a coking value of 80-95 wt.% ALCAN.

In an embodiment, the water-soluble temporary binder added in the step of mixing and agglomerating may comprise any suitable water-soluble natural or synthetic polymer, such as starch, sugar, lignosulphonate, humins, polyvinyl acetate (PVA), carboxymethylcellulose (CMC), carboxymethylcellulose (CMC) reacted with citric acid, methylcellulose or hemicellulose, or derivatives thereof.

In addition to the water-soluble temporary binder, a pitch product, or a composition of a pitch product and dispersant, or a pitch product-water slurry, or an emulsion of pitch product comprising pitch product particles dispersed in water in the presence of an emulsifying agent such as fatty acids, or resin acids, may be added to the mixture. The pitch product may be coal tar-based or petroleum-based, or derivatives thereof, or a combination thereof. Addition of a pitch product to the mixture may strengthen the agglomerates.

The water-soluble temporary binder may be utilized in an amount greater than 0 up to 75 % by weight of the water and binder mix, and preferably between 0 and 50 %, and even more preferably between 0 and 30 % by weight.

The water and binder mix may be utilized in an amount greater than 0 up to 45 % by weight of the total mix of primary particles, water, and binder, and preferably between 0 and 30 % by weight.

After the step of agglomerating, the mixture is at least partially dried. Preferably the dried mixture contains below 2 % by weight of water, preferably below 1 % by weight.

In an embodiment of the process of the present invention, the mixing and agglomerating of the coke particles with water and a water-soluble temporary binder is done at temperatures below 70°C, more preferably below 50°C, and most preferably at room temperature. An advantage of a method in accordance with the present invention is that it occurs at low processing temperatures and preferably even room temperature, such that high temperature reactors are not required and moreover resulting in the significantly lower occupational health and safety risks when using the method.

The step of mixing and agglomerating may occur in any type of mixing apparatus being able to mix and agglomerate at room temperature, preferably a high shear mixer, intensive mixer, or pelletizing mixer. Disk pelletizers, pin mixers or pin agglomerators may be used as well.

Using the combination of a water-soluble temporary binder and the volatile matters of the coke particles as binder instead of conventional high temperature binding by coal tar or petroleum pitch-based precursors may result in a more dense, low BET specific surface area (BET SSA) structure and reduced porosity due to the reduced amount of volatiles in the agglomerates prior to carbonization. Furthermore, the step of agglomerating can occur at room temperature which avoids the complication of operating a high temperature agglomeration process using conventional potentially harmful pitch binder materials.

To produce the agglomerated structure, the water-soluble temporary binder is used for the initial (mechanical) agglomeration of the primary particles (for example finely milled green coke of different origins such as petroleum coke or pitch coke mixed with other types of particles such as silicon oxide, graphite or metal particles), said particles having particle sizes below 50 micron and the coke particles having a volatile matter (VM) content of min. 5 wt.%, and preferably an ash content below 5000 ppm and sulfur content below 2 % as well.

In a subsequent carbonization process, the temporary binder is mostly decomposed to gaseous products, while the intrinsic VM in the coke particles undergoes devolatilization and coking, i.e. the VM is activated and then carbonized, to form an in-situ binder which bonds the primary particles (the coke particles, or as the case may be the mix of coke particles and other types of particles) together to form dense agglomerates with a size below 2000 micron, or below 1000 micron, or below 500 micron, and preferably below 100 microns with low porosity and BET specific surface areas. For a sufficient binding effect, the VM content of the coke particles used needs to be above 5 wt.%. The volatile constituents form tar-like binder active components during the early stages of carbonization which act like a glue to bind the primary particles together. Without being bound to any theory, working with an aqueous system of a binder material dissolved in water, the water component supports the agglomeration of the particles and the binder material then stabilizes the green agglomerates after the drying step. However, in the subsequent carbonization process the temporary binder typically used at low concentration levels is decomposed to a large extent. The VM of the green coke particles act as the actual binding material of the aggregates. As the resulting carbon has an excellent ability to graphitize, higher graphitization degrees can be obtained in a subsequent graphitization of the carbonized particles.

Depending on the targeted size of the carbonaceous precursor agglomerates, the particle size of the agglomerates may be adjusted to further use by mild mechanical milling, sieving or/and classification.

The carbonaceous precursor agglomerates as produced by the process of the invention may be very suitable as a precursor for isotropic graphite. In a further embodiment of the present invention, the process may include the step of further coating and binding the produced isotropic carbonaceous precursor agglomerates and further impregnating and graphitizing thereby achieving isotropic graphitic electrode materials for battery electrodes, in particular for lithium-ion batteries, and EV batteries.

The isotropic carbonaceous precursor agglomerates as produced by the process of the present invention may have a BET SSA in the range of 0.5-4 m²/g.

Further, the final agglomerated product may have an agglomerate size distribution of d50: between 1-and 50 micron, and/or d90: between 15 and 75 micron, and/or d100: below 100 micron.

Further, the sized agglomerates may have a tap density in the range of 0.7-1.4 g/cm3, and preferably 0.9-1.4 g/cm3.

The sized isotropic carbonaceous precursor agglomerates as produced by the process of the present invention showing a low BET specific surface area and high tap bulk density may be an advantageous precursor to produce premium isotropic graphite in a subsequent graphitization process in the manufacturing of lithium-ion battery negative electrode applications.

A graphite electrode as produced from the isotropic carbonaceous precursor agglomerates as produced by the process of the present invention may have the following characteristics:
- Graphite agglomerate size distribution of d50: 3-30 micron and/or d90: 20-80 micron,
- crystallinity: d002 between 0.3354-0.3370 micron and/or Lc between a20-500 nm
- BET SSA in the range of 1 and 4 m²/g
- Tap density in the range of 0.8-1.4 g/cm³
- Real density in the range of 2.22-2.67 g/cm³
- Reversible capacity in the range of 320-370 mAh/g

Besides the use of the produced agglomerates as carbonaceous precursor product for battery electrodes, these agglomerates may be used as carbon or graphite pellets in fluidized bed techniques e.g. in purification steps.

### EXAMPLE OF A PROCESS IN ACCORDANCE WITH THE PRESENT INVENTION:

Isotropic carbon precursor 1 was produced using a green petroleum coke (GPC) with a VM content of 11.7 %. The material was milled to a particle size d50 of 7 µm. The milled GPC was then agglomerated in a high intensity mixer using an aqueous binder system (lignosulfonate) until micropellets were formed. These were recovered from the mixer and subsequently dried. Afterwards the resulting micropellets were carbonized under nitrogen flow to a temperature of 1100°C. The material was further on mildly milled to the intended particle size as shown below.

Isotropic carbon precursor 2 was produced from a green coke with a d50 particle size of 6.2 µm having a VM content of 10.8 %. The milled material was then agglomerated in a high intensity mixer using an aqueous binder system and subsequently dried. The resulting micropellets were carbonized under nitrogen flow to a temperature of 1050°C and further mildly milled to the intended particle size (shown below).

The calcined petroleum cokes 1-3 are examples of pristine milled and sized calcined petroleum coke that has not undergone any kind of pelletization process. A person skilled in the art appreciates that the isotropic carbon precursor as produced in accordance with the present invention shows higher tap densities than pristine milled and sized calcined petroleum coke, combined with a relatively low surface area.

| Sample | **Surface Area** [m²/g] | **Tap Density** [g/cm³] | **D10** [µm] | **D50** [µm] | **D90** [µm] |
|---|---|---|---|---|---|
| Isotropic carbonaceous precursor 1 | 3.16 | 0.99 | 6.3 | 12.4 | 26.7 |
| Isotropic carbonaceous precursor 2 | 2.58 | 0.974 | 7.8 | 13.1 | 21.9 |
| Calcined petroleum coke 1 (pristine) | 2.96 | 0.946 | 9.0 | 15.6 | 25.7 |
| Calcined petroleum coke 2 (pristine) | 4.4 | 0.937 | 10.1 | 19.5 | 34.5 |
| Calcined petroleum coke 3 (pristine) | 5.35 | 0.895 | 6.6 | 13.1 | 22.9 |

Below a list is given of analytical procedures of the product parameters as used in this text:
- Particle size distribution (µm): Laser Diffraction, Malvern 3000 (dry dispersion)
- VM (%): ASTM D7582
- Real Density (g/cm³): ASTM D2638
- Sulfur (%): ASTM D6376
- BET surface area (m²/g): ISO 9277
- Tapped bulk density (g/cm³): Internal method according to DIN 51916

## Claims

1. A process for producing isotropic carbonaceous precursor agglomerates comprising the steps of
i. Providing coke particles with an average particle size < 50 µm and said particles having a volatile matter (VM) content between 4% and 20%
ii. Mixing and agglomerating the coke particles with the addition of water and a water-soluble temporary binder
iii. at least partially drying the mixture,
iv. Carbonizing the mixture

2. The process of claim 1, wherein the coke particles have an average particle size between 1-20 µm.

3. The process of claim 1, wherein the coke particles have an ash content below 5000 ppm.

4. The process of claim 1, wherein the coke particles are needle coke and/or other forms of green petroleum coke or pitch coke.

5. The process of claim 4, where natural or synthetic graphite, calcined petroleum coke fines, carbonaceous additives, carbonaceous waste materials, nano- and micron-sized silicon metal, silicon oxide, tin or aluminum metal particles, recycled materials, or combinations thereof, are added to the mixture.

6. The process of claim 5, wherein the recycled materials comprise recycled graphite.

7. The process of claim 1, wherein the mixing and agglomerating is performed by a high shear mixer, intensive mixer, or pelletizing mixer.

8. The process of claim 1, wherein the mixing and agglomerating is done at temperatures below 70°C.

9. The process of claim 1, wherein the water-soluble temporary binder can be starch, sugar, lignosulphonate, PVA, CMC, CMC reacted with citric acid, humins, methylcellulose or hemicellulose, or derivatives thereof.

10. The process of claim 1, wherein the water-soluble temporary binder is a composition comprising a pitch product and a dispersant, or a pitch product - water slurry, or an emulsion of a pitch product.

11. A process for the manufacturing of isotropic graphitic electrode materials for battery electrodes, in particular for lithium-ion batteries, said process comprising the process for producing isotropic carbonaceous precursor agglomerates in accordance with any of the above claims, and further graphitizing said agglomerates to electrode material.
